Europäisches Patentamt

European Patent Office

Office européen des brevets

(11) Veröffentlichungsnummer: **0 441 130 A2**

## (12) EUROPÄISCHE PATENTANMELDUNG

(21) Anmeldenummer: 91100323.4

(22) Anmeldetag: 11.01.91

(51) Int. Cl.⁵: **G01L 19/08**

(30) Priorität: 26.01.90 DE 4002271

(43) Veröffentlichungstag der Anmeldung:
14.08.91 Patentblatt 91/33

(84) Benannte Vertragsstaaten:
AT CH DE ES FR GB IT LI

(71) Anmelder:
**INDUSTRIEANLAGEN-BETRIEBSGESELLSCH-
AFT M.B.H.
Einsteinstrasse 20
W-8012 Ottobrunn(DE)**

(72) Erfinder: **Bartsch, Wolfgang, Dipl.-Ing.
Starenweg 8
W-8000 München 45(DE)**
Erfinder: **Sachs, Detlef, Dipl.-Ing.
Aicherstrasse 5
W-8080 Fürstenfeldbruck(DE)**
Erfinder: **Schönbrunner, Alfred
Feldstrasse 8
W-8081 Adelshofen(DE)**

(74) Vertreter: **Bohnenberger, Johannes, Dr. et al
Meissner, Bolte & Partner
Widenmayerstrasse 48 Postfach 86 06 24
W-8000 München 86(DE)**

(54) Vorrichtung zur Kontrolle kurzzeitiger Luftdruckschwankungen in Personentransportmitteln.

(57) Zunehmende Reisegeschwindigkeiten bewirken hohe Druckstöße bei Zugbegegnungen oder bei Tunneleinfahrten. Um mögliche Ohrenschmerzen bei den Fahrgästen zu verhindern, werden druckertüchtigte Reisewagen eingesetzt, deren Dichtigkeit jedoch mit zunehmender Betriebsdauer abnimmt. Dadurch treten die Luftdruckstöße immer stärker auch im Wageninneren auf. Um diese Effekte nach Zahl und Stärke festzustellen, und um daraus wirtschaftlich sinnvolle Nachdichtungsrhythmen abzuleiten, wird die erfindungsgemäße Vorrichtung zur Erfassung und registrierung physiologisch gewichteter kurz zeitiger Luftdruckschwankungen eingesetzt. Auch ist die Lokalisierung von Leckstellen möglich. Diese Vorrichtung arbeitet rein elektronisch unter Verwendung ausschließlich marktüblicher Bauteile; sie hat daher eine hohe Betriebszuverlässigkeit, ist preiswert und volumenmäßig klein.

EP 0 441 130 A2

# VORRICHTUNG ZUR KONTROLLE KURZZEITIGER LUFTDRUCKSCHWANKUNGEN IN PERSONENTRANS-PORTMITTELN

Die Erfindung betrifft eine Vorrichtung zur meßtechnischen Kontrolle von kurzzeitigen Luftdruckschwankungen nach dem Oberbegriff des Anspruchs 1.

Die Einführung von Zügen mit hohen Fahrgeschwindigkeiten erfordert den Einsatz druckertüchtigter Reisewagen, um die Fahrgäste vor den unangenehmen Ohrenschmerzen zu schützen, die infolge kurzzeitiger Luftdruckdstöße entstehen können, z.B. bei Zugbegegnungen oder bei Tunneleinfahrten. Die Druckdichtigkeit der Wagen läßt mit der Betriebsdauer nach, z.B. durch Verschleiß von Dichtungselementen. Deshalb müssen druckertüchtigte Reisewagen in bestimmten Abständen zur Nachdichtung aus dem Einsatz gezogen werden. Die Betreibergesellschaften sind an wirtschaftlichen Instandsetzungsrhythmen interessiert, deshalb besteht Bedarf an einem zuverlässigen, preiswerten Gerät zur Ermittlung der Druckstöße im Wageninneren nach Zahl und Intensität pro Fahrt oder pro Tag. Das Gerät soll in der Lage sein, diejenigen Druckstöße, die eingegebene-Grenzwerte der Verträglichkeit überschreiten, zu erfassen, zu zählen und zu protokollieren. Eine weitergehende Forderung betrifft die Lokalisierung der Leckage, damit die Reparaturarbeiten ohne zeitaufwendige Sucharbeit gezielt durchgeführt werden können.

Eine Vorrichtung, die diese Problemstellung betrifft, ist in der PA 39 40 719.5 beschrieben. Die Lösung erfolgt dort auf pneumatischem Weg mit Druckausgleichsbehälter und Drosselventil, es wird ein Differenzdruckaufnehmer hoher Empfindlichkeit benötigt.

Eine Erfindung, die die Luftdruckschwankungen im Innenraum eines Fahrzeugs gegen einen konstant gehaltenen Absolutdruck mißt, wird in der DE 27 19 627 beschrieben. Diese für hochgenaue Messungen konzipierte Vorrichtung zur Feststellung sehr geringer Luftdruckschwankungen ist nicht in der Lage, kurzzeitige Druckstöße, die im Begegnungsverkehr zweier Züge mit z.B. je 400 km/h (Magnetbahnzüge) auftreten, zu erfassen und zu protokollieren. Ferner ist es nicht möglich, längerzyklische atmosphärische Druckschwankungen zu berücksichtigen.

Eine weitere, das Messen von Drücken betreffende Erfindung zeigt die DE 28 56 710; hier wird eine Vorrichtung zum Messen von zyklisch pulsierenden, nach Dauer und Größe vorgegebenen Unterdrücken in Rohrleitungssystemen beschrieben. Eine Verwendung dieser Vorrichtung für das Messen nicht pulsierender zufallsverteilter Überdrücke in großräumigen Systemen unter gleichzeitiger Berücksichtigung längerfristiger atmosphärischer und höhenbedingter Luftdruckschwankungen sowie der Möglichkeit zur Ortung von Leckstellen ist nicht möglich.

Der Erfindung liegt daher die Aufgabe zugrunde, physiologisch unangenehme Luftdruckstöße mit Absolutdruckaufnehmern und rein elektronischer Meßwertverarbeitung zu erfassen, auszuwerten und möglichst die verursachenden Leckstellen hinreichend genau zu lokalisieren. Atmosphärische Druckänderungen sowie Druckänderungen als Folge unterschiedlicher Trassenhöhen über NN müssen erfaßt und laufend berücksichtigt werden können. Weiterhin wird gefordert, daß die physiologischen Bewertungszahlen variabel, d.h. frei eingebbar sein sollen, denn Luftdruckstöße in einem Großraumwagen wirken anders als in einem geschlossenen Abteil.

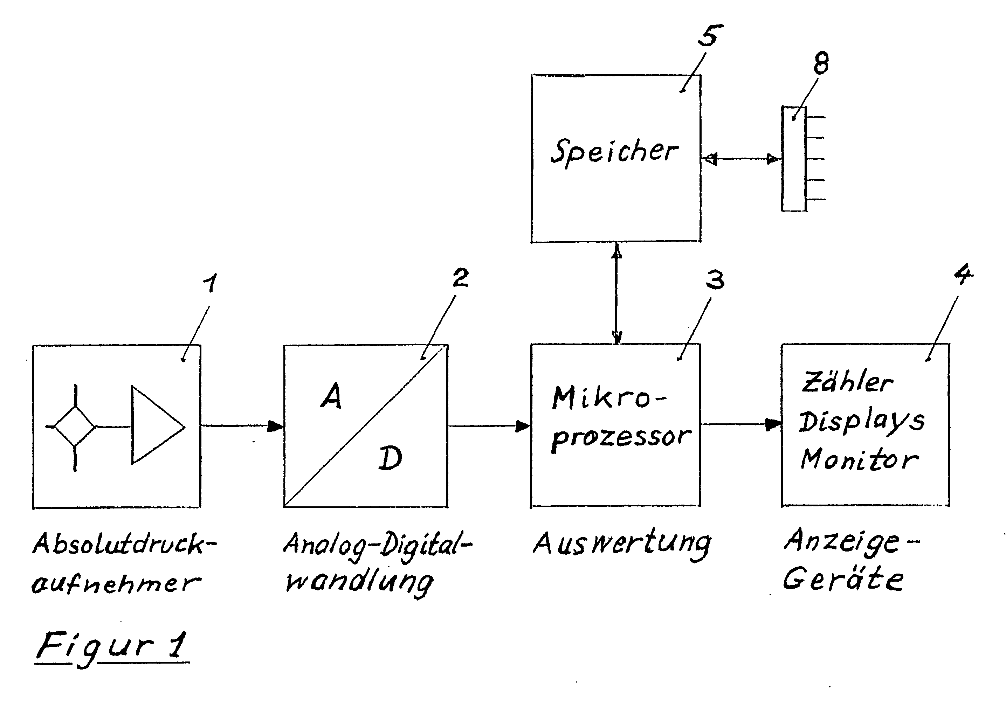

Diese Aufgabe wird erfindungsgemäß durch eine Schaltung gemäß dem Blockschaltbild in Figur 1 gelöst:

Ein Absolutdruckaufnehmer 1 nimmt laufend den Innendruck der Fahrgastzelle auf, ein nachgeschalteter Analog-Digital-Wandler (ADW) 2 digitalisiert die Meßwerte; die Auswertung erfolgt in dem nachgeschalteten frei programmierbaren Mikroprozessor 3.

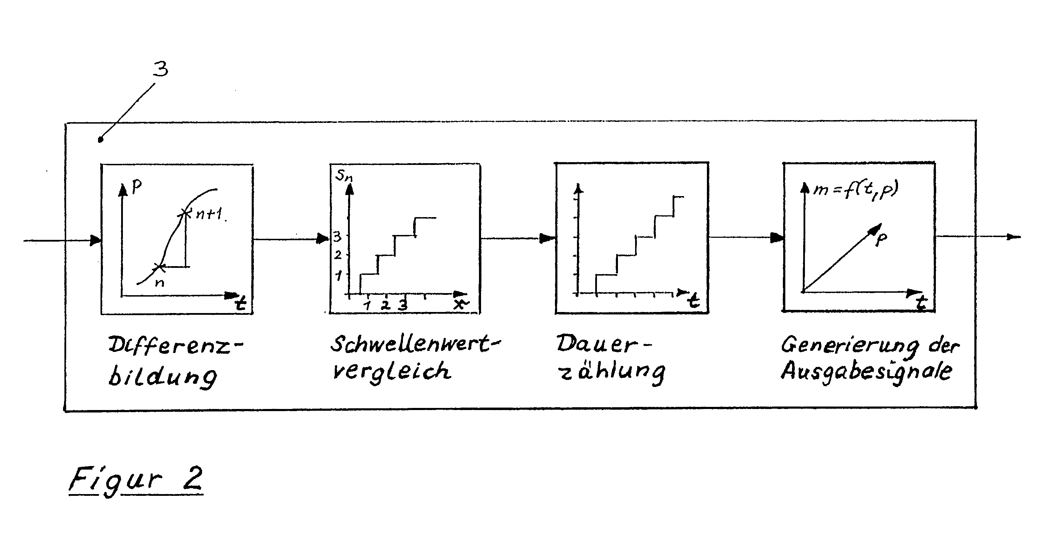

Dessen Funktionen sind im Blockbild der Figur 2 in vier Schritten dargestellt:

Im ersten Schritt wird der Druckgradient - sofern vorhanden - zu den Zeitpunkten $t_n$ und $t_{n+1}$ berechnet, eine evtl. vorhandene, Vorzeichenumkehr zum vorhergehenden Schritt wird festgestellt. In dem Programmteil des Mikroprozessors 3, der den Schwellenwertvergleich durchführt, sind mehrere Stufen (zweckmäßig ca. 5 bis 10) für die Druckanstiegswerte eingebbar, z.B. 50 Pa/s, 100 Pa/s ... 300 Pa/s. Die Zeitdauer des Druckanstiegs, d.h. die Zeitspanne, in der der Druckanstieg die vorgegebenen Schwellenwerte erreicht oder überschreitet, wird im zweiten Schritt ermittelt. Überschreitet der Druckanstieg die Schwellenwerte, und zwar für eine physiologisch begründete Mindestdauer (z.B. 3 sec), dann wird im dritten Schritt ein Zählsignal erzeugt, das für die zutreffende Schwellenwertklasse auf-addiert und auf einem Zählwerk angegeben wird. Im vierten Schritt erfolgt die Generierung der Ausgabesignale, die anschließend in der geforderten Form über ein Anzeige- und Auswertegerät 4, z.B. über ein Sichtgerät oder über ein Zählwerk oder über einen Meßstreifenplotter, ausgegeben werden. Unabhängig davon werden die aufbereiteten Ausgabesignale in einem Datenspeicher 5 abgespeichert, von wo sie bei Bedarf über eine Schnittstelle 8 an externe Auswerte- oder Darstellungsgeräte überspielt werden können. Das ist dann besonders vorteilhaft, wenn genauere Auswertungen speziellere und damit teure Auswertegeräte erfordern:

Mit wenigen mobilen Auswertegeräten lassen sich kostengünstig viele Arbeitsspeicher 5 nacheinander über die Schnittstellen 8 auswerten. Es kann zweckmäßig sein, nicht alle

Druckverläufe abzuspeichern, sondern nach dem Prinzip des Transienten-Recorders nur die, die bestimmte Ereigniskriterien erfüllen. Diese Schnittstelle 8 kann dazu eingesetzt werden, um neue Parameter in den Arbeitsspeicher 5 einzuschreiben und damit dem Mikroprozessor 3 verfügbar zu machen. Dies deuten die in beide Richtungen gehenden Pfeile zwischen den Bauelementen 3 und 5 bzw. 5 und 8 in Figur 1 an. Der Arbeitsspeicher 5 kann gegen Informationsverlust abgesichert werden, falls die Bordstromversorgung ausfällt, z.B. durch Batteriepufferung.

Die Lokalisierung einer Leckstelle erfordert den Einsatz mehrerer sinnvoll positionierter Druckaufnehmer 1 mit jeweils einem nachgeschalteten A-D-Wandler 2 und eine entsprechende Programmierung des Mikroprozessors 3: Zur Ausgabe kann z.B. ein Meßstreifenplotter eingesetzt werden, der die Druckprofile aller Druckaufnehmer 1 synchron über der Zeitachse aufträgt. Zur Ortung der Leckstelle wird der Effekt genutzt, daß der Druckaufnehmer, der der Leckstelle am nächsten liegt, in der Regel den größten Druckanstieg mißt und daß die zeitlichen Differenzen meßbar sind, mit denen die Luftdruckwelle nähergelegene Aufnehmer eher erreicht als entferntere.

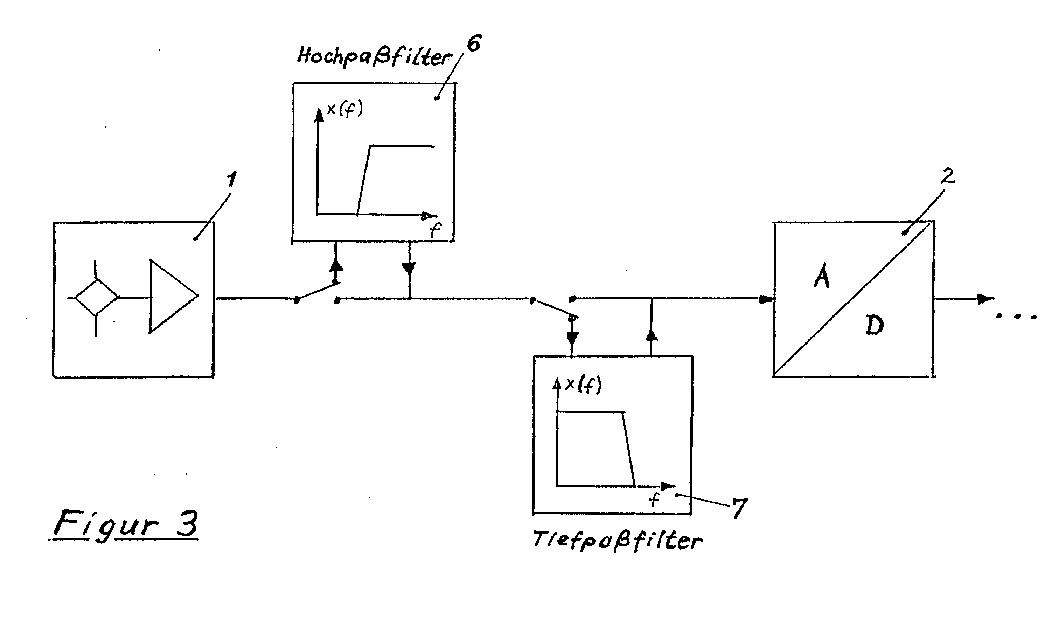

Eine Variante von Figur 1 besteht darin, dem Druckaufnehmer 1 einen Hochpaßfilter 6 nachzuschalten, so daß das Nutzsignal mit einem geringeren Auflösebereich des nachfolgenden A-D-Wandlers 2 auskommt (Figur 3). Ebenso kann es zur Unterdrückung von Störfreuenzen sinnvoll sein, einen der Abtastrate angepaßten Tiefpaßfilter 7 (Antialiasing-Filter) zwischen den Druckaufnehmer 1 und den A-D-Wandler 2 zu schalten (Figur 3). Auf die Möglichkeit, weitere Filterfunktionen ohne Schaltungsänderung durch Programmierung des Mikroprozessors 3 zu realisieren, wird hingewiesen. Ebenfalls wird auf die Möglichkeit hingewiesen anstelle eines (Absolut-)Druckaufnehmers 1 einen Druckanstiegsgeber einzusetzen; für diese Funktion sind sogar Mikrofone oder Lautsprecher bestimmter Größenklassen mit druckdichten Membranen geeignet.

Die erfindungsgemäße Vorrichtung ist durch die Verwendung preiswerter, auf dem Markt verfügbarer Bausteine gekennzeichnet. Die rein elektronische Verarbeitung der Meßsignale sowie die mögliche off-line-Auswertung der Daten erlaubt es, die erfindungsgemäße Vorrichtung in einem handlichen temperatur- und stoßgeschützten Gehäuse unterzubringen, das auch für den mobilen Einsatz geeignet ist. Wegen der auschließlich elektronischen Meßdatenverarbeitung ist eine hohe Zuverlässigkeit, auch im Dauerbetrieb, gegeben.

**Patentansprüche**

1. Vorrichtung zur örtlichen, zeitlichen und betragsmäßigen Erfassung, physiologisch gewichteter Bewertung und Registrierung kurzzeitiger Luftdruckschwankungen in Personentransportmitteln, **gekennzeichnet dadurch**, daß wenigstens ein Druckaufnehmer (1) zum permanenten Messen des Luftdrucks vorhanden ist, dem wenigstens ein Analog-Digital-Wandler (2) zur Digitalisierung der Meßsignale nachgeschaltet wird und daß wenigstens ein Mikroprozessor (3) zur Auswertung der Meßdaten eingesetzt wird, die über wenigstens ein Anzeige- und Auswertegerät (4) dargestellt und in einem Speicher (5) gespeichert werden. (Figur 1).

2. Vorrichtung gemäß Anspruch 1, **gekennzeichnet dadurch**, daß der Mikroprozessor (3) frei programmierbar ist und daß er jeweils ein Teilprogramm enthält zur Ermittlung der Druckanstiegswerte pro Zeiteinheit, zur Erfassung der Richtungsumkehr des Druckgradienten, zum Schwellenwertvergleich der Druckgradienten mit vorgebbaren Steigerungswerten, zur Ermittlung der Zeitdauer der Druckanstiege im Rahmen vorgegebener Mindestanstiegsklassen, zur Erzeugung von Zählsignalen für Druckanstiege, die vorgebbare Mindestdauern überschreiten, sowie zur Erzeugung der Ausgabesignale. (Figur 2).

3. Vorrichtung gemäß den Ansprüchen 1 und 2, **gekennzeichnet dadurch**, daß für ereignisgerechte Anpassung des auszuwertenden Signals ein Hochpaßfilter (6) zwischen den Druckaufnehmer (1) und den Analog-Digital-Wandler (2) geschaltet werden kann. (Figur 3).

4. Vorrichtung gemäß den Ansprüchen 1 bis 3, **gekennzeichnet dadurch**, daß zur Ausschaltung störender Druckschwankungsfrequenzen ein Tiefpaßfilter (7) dem Analog-Digital-Wandler (2) vorgeschaltet werden kann. (Figur 3).

5. Vorrichtung gemäß den Ansprüchen 1 bis 4, **gekennzeichnet dadurch**, daß anstelle des (Absolut-) Druckaufnehmers (1) ein Druckanstiegsgeber eingesetzt werden kann.

6. Vorrichtung gemäß den Ansprüchen 1 und 2, **gekennzeichnet dadurch**, daß durch die freie Programmierung des Mikroprozessors (3) alle in den Teilprogrammen gemäß Anspruch 2 vorgegebenen Kriteriengrenzwerte variabel den Anforderungen anpaßbar sind und daß weitere Filterfunktionen durch Programmierung eingebracht werden können.

7. Vorrichtung gemäß den Ansprüchen 1 bis 6, **gekennzeichnet dadurch**, daß mehrere Drukkaufnehmer (1) vorhanden sind und daß die Ausgabe der Meßsignale in (4) über der Zeitachse so erfolgt, daß durch die Zeit- und Intensitätsdifferenz der Meßsignale die Stelle der Undichtigkeit lokalisierbar ist.

8. Vorrichtung nach Anspruch 1, **gekennzeichent dadurch**, daß der Speicher (5) als ausfallsicherer Arbeitsspeicher zur Überbrückung von Ausfallzeiten der Bordstromversorgung ausgebildet ist, z.B. durch Batteriepufferung.

9. Vorrichtung nach den Ansprüchen 1 bis 8, **gekennzeichnet dadurch**, daß eine digitale Schnittstelle (8) vorhanden ist, über die die gespeicherten Meßwergebnisse an temporär anschließbare externe Anzeige- und Auswertegeräte abgerufen und/oder Parameter eingegeben werden können.

10. Vorrichtung nach den Ansprüchen 1 bis 9, **gekennzeichnet dadurch**, daß das Gerät kompakt in einem temperatur- und stoßgeschützten Gehäuse zum ortsfesten oder mobilen Einsatz untergebracht ist.

Figur 1

Speicher **5**

**8**

Absolutdruck-aufnehmer **1**

Analog-Digital-wandlung **2**

A / D

Mikro-prozessor **3**

Auswertung

Zähler Displays Monitor **4**

Anzeige-Geräte

EP 0 441 130 A2

Figur 2

EP 0 441 130 A2

EP 0 441 130 A2

Hochpaßfilter 6

x(f)

f

1

2

A

D

Tiefpaßfilter

x(f)

f

7

Figur 3